# EUROPEAN PATENT SPECIFICATION

(11) **EP 1 373 376 B1**
(45) Date of publication and mention of the grant of the patent: **23.08.2006**
(21) Application number: 02713954.2
(22) Date of filing: 08.03.2002
(51) Int. Cl.: C08J 5/12, C08J 7/12, C08J 3/075, B32B 9/02

(54) **HYDROGEL ATTACHED TO BACKING AND METHOD FOR MAKING SAME**
AN EINER RÜCKSCHICHT GEBUNDENES HYDROGEL UND VERFAHREN ZUR HERSTELLUNG
HYDROGEL FIXE A UN SUPPORT ET PROCEDE DE FABRICATION ASSOCIE

(30) Priority: 08.03.2001 US 273913 P
(43) Date of publication of application: 02.01.2004
(73) Proprietor: BIOARTIFICIAL GEL TECHNOLOGIES INC., Montreal, Québec H3A 1L4 (CA)
(72) Inventor: FAURE, Marie-Pierre, Ville St-Laurent, Quebec H4L 1X5 (CA); BRISSON, Jean-François, Montreal, Quebec H1L 3Z8 (CA); MARTINU, Ludvik, Montreal, Quebec H3S 1V1 (CA); KLEMBERG-SAPIEHA, Jolanta, Point Claire, Quebec H9R 3P8 (CA); ZABEIDA, Oleg, Montreal, Quebec H3W 1P9 (CA)
(74) Representative: Chapman, Paul William
(86) International application number: PCT/CA2002/000335
(87) International publication number: WO 2002/070590

(56) References cited:
- GB-A- 1 246 179
- US-A- 5 055 316
- US-A- 5 480 717
- US-A- 5 733 563
- US-A- 5 849 368
- QU X ET AL: "NOVEL BETA-EMITTING POLY(ETHYLENE TEREPHTHALATE) SURFACE MODIFICATION" JOURNAL OF BIOMEDICAL MATERIALS RESEARCH, WILEY, NEW YORK, NY, US, vol. 52, no. 3, 5 December 2000 (2000-12-05), pages 492-497, XP008008558 ISSN: 0021-9304

## Description

### FIELD OF THE INVENTION

The present invention relates to hydrogels attached to polymeric backings and methods for making same. More specifically, the present invention is concerned with a method of modifying the surface of a backing so as to make it adhere to hydrogels. It is also concerned with hydrogel products produced thereby.

### BACKGROUND OF THE INVENTION

The physical characteristics of hydrogels enable their use in a number of applications including controlled-release devices for various active ingredients. The fields in which these controlled-release devices find applications include the cosmetic, medical, biotechnological and laboratory fields.

Many hydrogels having the characteristics necessary to make them useful in many of these applications (high water content, capacity to release ingredients, etc.) also possess characteristics that constitute disadvantages. These hydrogels are often brittle and therefore difficult to handle. It is very difficult to manipulate large pieces of these hydrogels without breaking them. These hydrogels also have a tendency to dry out when left in the open air so that their efficiency is then greatly reduced. For instance, the efficiency of hydrogel wound dressings is reduced within a short time (15 minutes to a few hours) after application on body parts because by that time, a large part of their water content has evaporated.

For many of the above-mentioned applications, it may be convenient to have dried hydrogels and to be able to rehydrate them at will without losing any of their properties. For instance, the nature of certain active ingredients that are to be included within the hydrogels may require that they are introduced therein immediately before use. Such active ingredients are frequently unstable so that their efficiency is at an optimum immediately after production. However, current manufacturing practices often make it impracticable to prevent a certain delay between hydrogel production and use. Furthermore, it may be found advantageous to prepare hydrogels in advance and have them in stock; for example, a basic dried hydrogel matrix can be filled with different solutions and in this way be custom-made for the variety of applications for which the hydrogels may be intended. There is a disadvantage to this, however, since hydrogels tend to loose their original shape when dried and therefore may need to be reshaped in moulds upon rehydration. This additional manipulation may introduce contaminants. These inconveniences make the process of drying and rehydrating hydrogels cumbersome. Using hydrogels that are attached to backings helps to avoid these problems, by permitting rehydrated hydrogels to keep their original shapes and therefore make the use of dry hydrogels simpler.

Some attempts have therefore been made to provide hydrogels with reinforcing means and characteristics to facilitate their handling without affecting their useful properties.

Methods have been described for fastening hydrogels to backings made of materials possessing ductility and tensile strength generally lacking in hydrogels. For instance, methods have been described wherein plastic polymer backings are attached to hydrogels through the use of chemicals such as co-crosslinking agents (for example, glutaraldehyde or cyanoacrylates).

The use of chemicals in hydrogels involves many disadvantages. For instance, the chemicals initially applied at the interface of the backing and the hydrogel may dissolve and migrate through the hydrogel. These chemicals could therefore come into contact with the medium that is to be covered by the hydrogel. This constitutes a particular problem when the medium is a wound or skin. In sensitive diagnostic tests, such as immunological assays where hydrogels can serve as media, these chemicals may distort the results. The presence of dissolved chemicals in the hydrogels could affect the properties of active ingredients contained therein. Chemicals used as adhesive agents may also cause the treated backing to swell. Such methods of attaching hydrogels to backings also generally lack simplicity because they require multiple steps and manipulations.

Other methods for obtaining hydrogels attached to backings have been described in the art. For example, U.S. Pat. No. 5,849,368 discloses a method for rendering polymeric medical devices intended to be introduced into the body (catheter, etc.) more hydrophilic. It involves the formation of a thin hydrogel coating on those polymers with the use of plasma gas treatment and the application of an intermediate polyurethane-urea component. It comprises the following steps: 1°) rendering the plastic polymer surface more polar and activated through reacting same with successive oxygen-containing and nitrogen-containing plasma treatments; 2°) applying to the treated plastic polymer surface isocyanate-terminated prepolymer intermediates; and 3°) converting the prepolymer into a hydrogel by applying an aqueous solution of hydrogel co-polymer on the coating to obtain a commingled hydrogel network. The function of plasma gas treatment is to prepare the plastic polymer surface for attachment to the intermediate isocyanate-terminated prepolymer. Two plasma gas treatments are performed to so prepare the polymer, the combination thereof being described as superior to only one plasma gas treatment.

U.S. Pat. No. 5,849,368 also relates to methods for rendering polymers hydrophilic. Multiple steps and chemical reactants or solvents are required. This patent is concerned with coatings, and describes neither the use of hydrogels as matrices for active ingredients nor the simple juxtaposition of preformed hydrogels to a treated polymeric surface.

GB 1246719 describes hydrogel laminates consisting of a homogenous layer of a polymer and a layer of spongy, porous, sparingly cross-linked hydrogel.

US 5480717 relates to a hydrogel laminate comprising a substrate coated on a surface with an adhesive polymer and adjacent to the coating a layer of hydrogel comprising at least one hydrophilic polymer.

Qu and Weinberger (Journal of Biomedical Materials Research 52(3) 492-497) describe a method of treating poly(ethylene terephthalate) balloons with oxygen plasma in order to adhere a chitosan hydrogel.

US 5,055,316 relates to a method for producing extremely tight binding of proteins to the surface of a synthetic resin. The binding is achieved by treating the surface using plasma polymerisation with a halogenated hydrocarbon gas deposited by radio frequency glow discharge.

There is therefore a need for a new, simpler and safer method for attaching hydrogels to backings.

### OBJECTS OF THE INVENTION

The general object of the present invention is therefore to provide an improved method for attaching hydrogels to backings.

An object of the present invention is to provide a method for attaching backings to hydrogels and hydrogel products produced thereby with none of the inconveniences of the prior art.

Another object of the present invention is to provide a simpler and safer method for attaching preformed hydrogels to backings.

It is a further object of the present invention to provide hydrogels products that are reinforced and easy to handle, and which may have a reduced tendency to dry and/or to lose any of their useful properties.

Another object of the present invention is to provide hydrogels attached to backings that can remain moist for a time sufficient to enable adequate transfer of pharmaceutically and cosmeceutically active ingredients.

Another object of the present invention is to provide hydrogels attached to backings that do not contain crosslinking and co-crosslinking agents.

Another object of the present invention is to provide hydrogels attached to backings wherein the hydrogels can be dried and rehydrated at will without losing any useful properties.

### SUMMARY OF THE INVENTION

In accordance with the present invention, there is provided a method for attaching a preformed hydrogel to a polymer backing comprising exposing a surface of the backing to an activated gas and depositing the preformed hydrogel on the exposed surface of the backing.

In a preferred embodiment, the activated gas originates from an electrical discharge using an excitation frequency selected from the group consisting of low frequency, radiofrequency and microwave frequency.

In an alternative embodiment, the method of the present invention comprises making a protein-containing hydrogel attach to a polymer backing by exposing a surface of the backing to an activated gas so as to produce a backing surface possessing a nitrogen/oxygen atomic ratio of at least about 0,5 on the surface of the backing and depositing the hydrogel on the exposed surface of the backing. In a preferred embodiment, the activated gas treatment is a plasma gas treatment and the protein in the hydrogel is selected from the group consisting of hydrolyzed bovine serum albumin, hydrolyzed soy, casein, hydrolyzed pea albumin and hydrolyzed ovalbumin. In a more preferred embodiment, the plasma gas comprises a gas selected from the group consisting of nitrogen and ammonia and/or their mixtures with other gases.

In yet a more preferred embodiment, the protein-containing hydrogel further comprises an activated polyethylene glycol (PEG).

In another embodiment, the backing is selected from the group consisting of rubber and plastic polymer. Preferably, when the backing is a plastic polymer it is selected from the group consisting of polyethylene, polyethylene terephthalate, polypropylene, polyurethane, polyether block amide, ethyl vinyl acetate, polyester, copolyesters, polyvinyl chloride (PVC), Nylon, acetal, polysulfone (PS), polyphenylene sulphide (PPS), polyetheretherketone (PEEK), polytetrafluoroethylene (PTFE Teflon^{™}) and polymethylmethacrylate, and when the backing is a rubber it is selected from the group consisting of neoprene and nitrile.

In one embodiment, the treatment in the method of the present invention is performed with a working pressure comprised of between about 10⁻⁴ to about 760 Torr. In a preferred embodiment, the working pressure is between about 10 mTorr to 1 Torr.

The present invention further describes a hydrogel-product comprising a polymer backing attached to a preformed hydrogel wherein the surface of the backing on which the preformed hydrogel is applied has been modified by activated gas treatment so as to become adhesive to the preformed hydrogel. In a preferred embodiment, the backing contiguous to the preformed protein-containing hydrogel possesses a nitrogen/oxygen atomic ratio of at least about 0.5. In another preferred embodiment, the preformed protein-containing hydrogel contains a protein selected from the group consisting of hydrolyzed bovine serum albumin, hydrolyzed soy, casein, hydrolyzed pea albumin and hydrolyzed ovalbumin, the surface of the backing contiguous to the protein-containing hydrogel has been exposed to activated gas treatment and the activated gas comprises a gas selected from the group consisting of nitrogen and ammonia, and the protein-containing hydrogel further comprises activated polyethylene glycol. In yet another preferred embodiment, the backing is selected from the group comprising rubber and plastic polymer. Preferably, the backing is a plastic polymer selected from the group consisting of polyethylene, polyethylene terephthalate, polypropylene, polyurethane, polyether block amide, ethyl vinyl acetate and co-polyesters.

The protein-containing hydrogel product of the present invention may be used in a number of applications, including as a layer for covering and preserving the moisture of objects, food and tissues, as an active ingredient delivery system and as a diagnostic tool.

As provided herein, the expression "active ingredient" is meant to include any substance that may be desirably introduced into hydrogels. Without limiting the generality of this definition, it is meant to include pharmaceutically-active ingredients, dyes, diagnostic reactants, cosmetical and cosmeceutical ingredients, culture media ingredients, etc.
As provided herein, the term "backing" is meant to include any material of any nature, form and thickness that may be attached to hydrogels according to the methods and products of the present invention. Without limiting the definition given above, it includes polymers and rubber in the form of films, tubes, layers, etc.

As provided herein, the term "hydrogel" is meant to include any hydrogel of any nature, form and thickness that may be used according to the methods and products of the present invention.

As provided herein, the expression "preformed hydrogel" is meant to refer to any hydrogel that is formed prior to its application on a backing.

As provided herein, the expression "activated gas" is meant to include any gas or vapors that have been subjected to electrical discharges so that they may comprise positively charged particles and/or negatively charged particles and/or ions and/or gas molecules, fragments or radicals.

As provided herein, the expression "aging time" is used to refer to the time elapsed between the end of the activated gas treatment of the backing and the moment when the treated backing is applied to a hydrogel.

As used herein, the term "attach" and its derivatives include covalent bonding, adsorption, such as physisorption or chemisorption, ligand/receptor interaction, hydrogen bonding, ionic bonding, mechemical interlocking or interface mixing.

Other objects, advantages and features of the present invention will become more apparent upon reading of the following non-restrictive description of preferred embodiments thereof, given by way of examples only with reference to the accompanying drawings.

### DESCRIPTION OF THE PREFERRED EMBODIMENTS

Activated gas treatment is a method known for transforming the surface of materials (Mittal and Pizzo, 1999). It involves electrical discharge. The frequency of the electrical discharge is not critical. For instance, the gas may be activated by a direct current discharge or an electrical discharge having a frequency range varying from low frequency to radio frequency and to microwave frequencies. The activated gas in the discharge is then called plasma. Other frequencies may be used in accordance with the present invention. The electrical power is transferred to atoms and molecules in their gas phase, and the resulting species (both positively or negatively charged and physically and chemically activated), thereby forms an activated gas capable of interacting with the surface of the exposed treated material.

This interaction can result in various modifications of the surface of the treated material: creation of chemically active groups on the treated surface, increase of the electric charge formed on the surface, increase of the surface energy which results in a higher wettability (hydrophobicity/hydrophilicity), chemical inertia, roughness, and other surface modifications that may occur as a result of activated gas treatment.

The nature of the chemically active groups created depends on various factors, including the nature of the gas used in the treatment. For instance, functional moieties such as -NH₂, -NH-, -C-N, -C=N and C≡N, and O=C-N may be produced on the surface of the material exposed to plasma treatment when nitrogen or ammonia, or their mixtures with other gases, are used. Other gases such as oxygen may produce negatively charged functional moieties such as hydroxyl (OH⁻), carboxyl (-COO⁻), carbonyl (C=O), epoxy, or ester (O=C-O-C).

The present invention therefore proposes the use of an activated gas treatment to increase the adhesive power of backings so that they may attach to hydrogels. It was indeed found that hydrogels, which are constituted almost entirely of water may attach to backings treated with activated gas.

Although the results exposed herein refer to certain types of hydrogels (protein-containing hydrogels), the present invention should not be so limited. Indeed, once it has been shown that some hydrogels can attach to activated gas treated backings, there is no reason to believe that other hydrogels would not behave in the same way. Similarly, a window of parameters related to the formation of active gas is very broad; this includes pressure, excitation frequency, power level, the method of power application, reactor configuration, and others.

In a specific embodiment of the present invention, however, protein-containing hydrogels containing as little as 2% w/w of protein were used. These hydrogels have been shown to be sufficiently charged to readily attach to activated gas-treated backings. Proteins contain positive and negative charges. However, the positive charges of proteins in protein-containing hydrogels, such as those described in US Patent No. 5,733,563, are assumed to be used by the polymers also contained in these hydrogels. The resulting remaining charge of the proteins is therefore negative.

In a preferred embodiment of the present invention, therefore, the hydrogels are comprised of water-soluble polymers and hydrolysed proteins which are soluble in alkaline solutions.

Backings used in accordance with the present invention are not limited. Polymers, such as plastics, co-polymers and rubbers, for instance, possess the characteristics necessary to make them useful as backings for preferred embodiments of the present invention. They possess good mechanical properties, sufficient tensile strength, ductility, are resistant to wear, and are non-expensive.

There is no restriction to the nature of the plastic polymers that may be used in the present invention. Tests have shown that polyethylene, polyethylene terephthalate, polystyrene, polypropylene, polyurethane, polyether block amide, ethyl vinyl acetate, PVC, polycarbonate, co-polyesters, and natural polymers, such as cellulose, for instance, can be attached to hydrogels according to the methods of the present invention. It is believed that any plastic polymer can be treated according to the present invention so as to adhere to hydrogels. The choice of the specific plastic polymer used is therefore only directed by the particular application for which a hydrogel product of the present invention is intended.

It was observed that the binding of treated backing to hydrogels leads to different levels of adhesion, depending on the treatment parameters. When the attachment is complete, the binding is of such strength that it is impossible to remove the hydrogel from the backing without breaking the former. It was also found that the interaction produced between the treated backings and the protein-containing hydrogels was irreversible.

It was further observed in specific embodiments of the present invention that certain factors played a role in the uniformity of the treated backings' adhesive power. Although experiments performed with regard to the present invention did not demonstrate a clear correlation between any factor and reduced adhesive surface of the backings, these experiments seem to point to certain factors as possible causes. It was observed that the degree of the adhesion of the treated backing surface generally decreases with the aging time of the backing. It was hypothesized that the charged functional moieties on the backings progressively migrate from the outside surface of the backing toward the inside of the backing, thereby reducing the backing's adhesive power. Other factors may also have played a role in the treated backings' loss of adhesion, such as manipulation of the treated backings, air contaminants, the uneven surfaces of backings, and water remaining on the surface of hydrogels.

We will now present in further detail how various embodiments of the present invention were performed by way of the following non-limiting

### examples.

### Example 1: Plasma treatment apparatus

Surface modification of backings according to the method of the present invention was achieved with the use of the plasma treatment equipment available at the Ecole Polytechnique of Montreal in the Province of Quebec, Canada.

This equipment comprises power supplies and a treatment chamber where a selected gas is introduced and transformed into plasma by the action of one or more excitation sources. The plasma then comes into contact with the backing surface to be treated in the plasma zone.

This equipment permits plasma to be produced through three types of excitation sources, namely, microwave, radiofrequency and double-frequency, the latter comprising a simultaneous use of radiofrequency and microwave signals. The specific frequencies of microwave and radiofrequency signals used in the experiments for which results are presented herein were, respectively, 2.45 GHz and 13.56 MHz. These specific frequencies were chosen for practical reasons only: certain frequencies are reserved for telecommunication and high frequencies are more expensive to produce. Other frequencies could also have appropriately been used.

The microwave power was transmitted to the treatment chamber through a fused silica window located in front of the backing being treated, while the radiofrequency signal was transmitted using an electrode that also served as a support for the backing. The electrode was preferably cooled with water during treatment to avoid overheating of the backing. The gas could be efficiently activated with all frequencies.

The working pressure was adjusted and varied between 60 and 600 mTorr during various experiments performed in relation to specific embodiments of the present invention. Under these conditions, the residual pressure in the chamber was inferior to 1 mTorr. It is believed that the working pressure could adequately have been anywhere between 10⁻⁴ and 760 Torr to accomplish similar results. The microwave power was varied between a few tens and hundreds of watts, while the radiofrequency was adjusted so as to keep a constant self-bias voltage from 10 to several hundreds of volts.

Two types of exposure were tried with this equipment according to the method of the present invention. Polymers were exposed to plasma according to 1) a batch processing method, and 2) a continuous processing method.

The batch processing method involved cutting pieces of polymers of desired sizes, placing each of them on the substrate holder electrode in the plasma zone and exposing them to plasma for a selected residence time.

The continuous process method involved the use of a roll system for conveying through the chamber flexible polymer films intended as backing. This roll system could support films having a width of up to 30 cm.

The film was moved through conveyor to the plasma zone at a selected speed. The speed at which the film was unrolled in the plasma zone determined its residence time in plasma. Advantageously, the residence time was limited so as to avoid overheating.

In the experiments for which results are presented here, various gases or mixtures of gases were used. Hence, ammonia, nitrogen, oxygen, air and mixtures of argon and nitrogen, argon and ammonia, helium and nitrogen, helium and ammonia were used. It was observed that, with the exception of oxygen alone, all these gases and mixtures of gases were able to modify the backings so that they attached to hydrogels.

It was hypothesized that the reason why activated pure oxygen could not efficiently modify backings so that they would attach to protein-containing hydrogels could be explained by the following. The negatively charged functional groups produced by activated oxygen are not compatible with negatively charged protein-containing hydrogels. Although activated pure oxygen was shown not to be efficient in modifying backings so that they would attach to protein-containing hydrogels, activated air, which contains much less oxygen, was efficient. This seems to indicate that the use of activated oxygen in itself does not prevent treated backings from being adhesive to protein-containing hydrogels, but rather that only an excessive concentration of oxygen in the activated gas may possess such effect. Therefore, oxygen may also be appropriately used in activated gas according to the present invention to produce backings to be attached to protein-containing hydrogels. It can also obviously be used without departing from the spirit of the present invention to modify backings to be attached to other types of hydrogels more compatible with negatively charged oxygen-containing functional moieties.

The adhesive power of the backing to a hydrogel was evaluated after a hydrogel layer was deposited on a treated backing and was maintained there for a short time. The adhesive power was initially described as "uniform", "partial" or "residual". The designations "uniform adhesion", "partial adhesion" and "residual adhesion" were used, respectively, when substantially the whole surface (> 80%), a portion of the surface (25 to 80%) and a very limited portion of the surface (< 25%) of the hydrogel had attached to the treated backing. It was observed that the portions of the hydrogel that were attached to the treated backings were irreversibly attached; it was only possible to remove the hydrogel by scraping it off the backing.

Aging time of the treated backings was measured in various storage conditions. The type of storage used (free atmosphere, vacuum and nitrogen atmosphere) did seem to influence the adhesive power.

X-ray photoelectron spectroscopy analysis (hereinafter called "XPS") performed on the treated surface of backings indicated that a surface concentration ratio of nitrogen/oxygen lower than 0.5 on the treated surface correlated with a less uniform adhesive power or an absence of adhesive power when applied to protein-containing hydrogels.

### Example 2: Hydrogel preparation

A polyethylene glycol (PEG) dinitrophenyl carbonate powder was combined with a hydrolyzed protein solution (in distilled water) having a concentration ranging from about 5 % to about 15% (w/v). This combination was vigorously mixed until all the PEG powder was dissolved. A strong base (such as NaOH, KOH, LiOH, RbOH, CsOH) or an organic base were added to the mixture.

After the mixture polymerized so as to form a hydrogel (5 to 120 minutes after the addition of the base depending on the volume of base added), it was washed in a buffer solution such as phosphate 10 mM pH 7.4 to eliminate secondary products. Then, the hydrogel was equilibrated in an active ingredient solution. The hydrogel was then dried to remove remaining excess water. The excess water could be removed with the use of absorbing paper for 15 minutes and of an industrial dryer.

The protein solution used for the making of a PEG-soy hydrogel, a PEG-BSA hydrogel, and a PEG-PA hydrogel for which results are presented herein, were respectively hydrolyzed soy protein, hydrolyzed bovine serum albumin (BSA) and hydrolyzed pea albumin (PA).

### Example 3: Batch processing plasma treatment of polyethylene

Food grade polyethylene films having thicknesses of 100 to 200 µm were exposed to microwave-produced plasma gas. These polyethylene films were exposed for variable residence times to plasma of various gases: ammonia, nitrogen and oxygen. The adhesive power of samples of polyethylene films treated in specified conditions was tested on three kinds of protein-containing hydrogels: polyethylene glycol 4,6 K - bovine albumin serum hydrogel [hereinafter called "PEG-BSA_{4,6K}"]; polyethylene glycol 8 K - pea albumin hydrogel [hereinafter called "PEG-PA_{8K}"]; and polyethylene glycol 8 K - soya bean globulin hydrogel [hereinafter called "PEG-SOYA_{8K}"]. These hydrogels were prepared according to the method described in example 2, above.

### Ammonia

Polyethylene films treated with ammonia plasma for residence times of 15 seconds and 6 seconds uniformly attached to PEG-BSA immediately after treatment (t=0). The adhesion was observed 5 seconds after the application of PEG-BSA on the films. The films uniformly attached to PEG-PA_{8K} 30 seconds after contact.

This uniform adhesion was still observed after 16 hours of storage at 25°C of the hydrogels with backings and after a rinse in an ionic buffer.

### Nitrogen

Polyethylene films treated with nitrogen plasma for a residence time of 3 seconds uniformly attached to PEG-BSA immediately after treatment (t=0).

The adhesion was observed 5 seconds after the application of PEG-BSA on the films. The films uniformly attached to PEG-PA_{8K} 30 seconds after contact Again, at an aging time of sixteen hours with storage conditions of open-air atmosphere at 25°C, the treated polyethylene films demonstrated minor adhesion to hydrogels.

### Oxygen

Polyethylene films treated with oxygen plasma for a residence time of 10 seconds showed no adhesion immediately after treatment (t=0). A minor adhesion was observed after 16 hours of contact.

A reverse correlation between the adhesion property of treated polyethylene backings and the aging time was observed. Treated polyethylene films having sixteen hours of aging time with storage conditions of open-air atmosphere at 25°C only showed residual adhesion to hydrogels, whereas uniform adhesion had been observed with these treated backings immediately after treatment (t=0).

### Example 4: Batch processing of polyethylene terephthalate

Sheets of polyethylene terephthalate (hereinafter called "PET") having thicknesses of 13 µm and 100 µm were exposed to plasma of various gases or mixtures of gases: (nitrogen, ammonia, oxygen, argon, helium, air, argon-nitrogen, helium-nitrogen, helium-ammonia, argon-ammonia) produced by three excitation sources (microwave, radiofrequency and simultaneously microwave and radiofrequency).

The microwave power varied between 50 and 400 watts. The radiofrequency power varied between 5 and 600 watts, which corresponded to a negative substrate bias voltage of from 10 to 750 V. The working pressure varied between 20 and 500 mTorr. The gas flow varied between 20 and 60 standard cubic centimeters per minute (sccm). The polymer sheet was exposed to the plasma for periods varying between 3 seconds and 2 minutes.

Table 1, below, presents examples of the conditions under which treatments for samples 1 to 98 were performed.

**Table 1: Treatment Conditions for Polymer Backing Experiments**

| # | Gas | Gas flow [sccm] | RF Bias/Power [V/W] | MW [W] | Pressure (mTorr) | Exposure Time [sec.] | PET thickness [µm] |
|---|---|---|---|---|---|---|---|
| 1 | NH₃ | 30 | - | 200 | 200 | 60 | 13 |
| 2 | NH3 | 30 | - | 200 | 200 | 20 | 13 |
| 3 | NH3 | 30 | - | 200 | 200 | 60 | 13 |
| 4 | NH3 | 30 | - | 200 | 200 | 60 | 13 |
| 5 | NH3 | 60 | - | 400 | 200 | 30 | 13 |
| 6 | NH3 | 60 | - 100 | 400 | 200 | 60 | 13 |
| 7 | NH3 | 60 | - 200 | 400 | 200 | 120 | 13 |
| 8 | NH3 | 60 | -200 | 400 | 200 | 240 | 13 |
| 9 | NH3 | 60 | - | 400 | 200 | 120 | 13 |
| 10 | NH3 | 60 | -200 | - | 200 | 60 | 13 |
| 11 | NH3 | 60 | - 300 /150 | - | 200 | 60 | 13 |
| 12 | NH3 | 60 | - 300 /150 | - | 200 | 30 | 13 |
| 13 | NH3 | 60 | - 300 /150 | - | 200 | 11 | 13 |
| 14 | NH3 | 60 | - 300 /150 | - | 200 | 3 | 13 |
| 15 | N₂ | 60 | - 250 /150 | - | 200 | 30 | 13 |
| 16 | N₂ | 60 | - 250 /150 | - | 200 | 10 | 13 |
| 17 | N₂ | 60 | - 250/150 | - | 200 | 3 | 13 |
| 18 | N₂ | 60 | - 250 /150 | - | 200 | 3 | 13 |
| 19 | N₂ | 60 | - | 400 | 200 | 120 | 13 |
| 20 | N₂ | 60 | - | 400 | 200 | 240 | 13 |
| 21 | N₂ | 60 | - | 400 | 200 | 60 | 13 |
| 22 | N₂ | 60 | - 160 | 400 | 200 | 30 | 13 |
| 23 | N₂ | 60 | - 300 /150 | 400 | 200 | 60 | 13 |
| 24 | N₂ | 60 | - 300/150 | 400 | 100 | 60 | 13 |
| 25 | N₂ | 60 | - 300 /150 | 400 | 100 | 30 | 13 |
| 26 | N₂ | 60 | - 300 /150 | 400 | 100 | 10 | 13 |
| 27 | N₂ | 60 | - 300 /150 | 400 | 100 | 3 | 13 |
| 28 | N₂ | 60 | - 300 /150 | - | 100 | 30. | 50 |
| 29 | N₂ | 60 | - 300 /150 | - | 100 | 10 | 50 |
| 30 | N₂ | 60 | - 300 /150 | - | 100 | 3 | 50 |
| 31 | N₂ | 60 | - 300 /150 | - | 40 | 10 | 50 |
| 32 | O₂ | 60 | - 300 /150 | - | 100 | 30 | 50 |
| 33 | O₂ | 60 | - 300 /150 | - | 100 | 60 | 50 |
| 34 | O₂ | 60 | - | 400 | 100 | 120 | 50 |
| 35 | O₂ | 60 | - 300 /150 | 400 | 200 | 60 | 50 |
| 36 | Air | 60 | 300 | - | 200 | 30 | 50 |
| 37 | Air | 60 | - | 400 | 200 | 60 | 50 |
| 38 | Air | 60 | - 300 /150 | 400 | 200 | 30 | 50 |
| 39 | N₂ | 60 | - 300 /150 | - | 350 | 10 | 50 |
| 40 | N₂ | 60 | - 300 /150 | - | 500 | 10 | 50 |
| 41 | N₂ | 60 | - 180 /150 | - | 480 | 10 | 50 |
| 42 | N₂ | 60 | - 100 / 40 | - | 200 | 10 | 50 |
| 43 | N₂ | 60 | - 50 / 15 | - | 200 | 10 | 50 |
| 44 | N₂ | 60 | - 400/240 | - | 200 | 10 | 50 |
| 45 | N₂ | 60 | - 500 /350 | - | 200 | 10 | 50 |
| 46 | N₂ | 60 | - 750/ 600 | - | 200 | 10 | 50 |
| 47 | N₂ | 60 | - 750/600 | - | 200 | 3 | 50 |
| 48 | N₂ | 60 | - 200 | - | 200 | 10 | 50 |
| 49 | N₂ | 60 | - 300 | - | 200 | 30 | 50/13 |
| 50 | N₂ | 60 | - 300 | - | 200 | 30 | 50 |
| 51 | N₂ | 60 | - 300 | - | 200 | 10 | 50/13 |
| 52 | N₂ | 60 | -300/120 | - | 200 | 30 | 50 |
| 53 | NH₃ | 60 | - 300 / 170 | - | 200 | 60 | 50 |
| 54 | NH₃ | 60 | - 300 / 170 | - | 200 | 60 | 50 |
| 55 | NH₃ | 60 | -300 | - | 100 | 60 | 50 |
| 56 | N₂ | 60 | - 300 | - | 200 | 60 | 50 |
| 57 | N₂ | 60 | - 300 | - | 200 | 30 | 50 |
| 58 | N₂ | 60 | - 300 | - | 200 | 30 | 50 |
| 59 | N₂ | 60 | - 300 | - | 200 | 30 | 50 |
| 60 | N₂ | 60 | -300 | - | 200 | 10 | 50 |
| 61 | N₂ | 60 | -300 | - | 60 | 10 | 50 |
| 62 | N₂ | 60 | -300 | - | 100 | 10 | 50 |
| 63 | N₂ | 60 | -300 | - | 300 | 10 | 50 |
| 64 | N₂ | 60 | - 300 | - | 500 | 10 | 50 |
| 65 | N₂ | 60 | - 300 | - | 300 | 10 | 50 |
| 66 | N₂ | 60 | - 300 | - | 300 | 10 | 50 |
| 67 | N₂ | 60 | -150 | - | 300 | 10 | 50 |
| 68 | N₂ | 60 | -100 | - | 300 | 8 | 50 |
| 69 | N₂ | 60 | -300 | - | 300 | 5 | 50 |
| 70 | N₂ | 60 | - 300 | - | 300 | 30 | 50 |
| 71 | N₂ | 60 | -300 | - | 200 | 10 | 50 |
| 72 | N₂ | 60 | - 300 | - | 200 | 30 | 50 |
| 73 | Ar | 60 | - 300 | - | 200 | 15 | 50 |
| 74 | Ar/N₂ | 60 | - 300 | - | 200 | 15/30 | 50 |
| 75 | Ar/N₂ | 60 | - 300 | - | 200 | 15/30 | 50 |
| 76 | He/N₂ | 60 | -300 | - | 200 | 30/30 | 50 |
| 77 | He/N₂ | 60 | -300 | - | 200 | 30 | 50 |
| 78 | HN3 | 60 | - 300 | - | 200 | 30 | 50 |
| 79 | He/NH₃ | 60 | - 300 | - | 200 | 30 | 50 |
| 80 | N₂ | 60 | - 300 | - | 200 | 10 | 50 |
| 81 | N₂ | 60 | - 300 | - | 200 | 30 | 50 |
| 82 | N₂ | 60 | - 300 | - | 200 | 10 | 50 |
| 83 | N₂ | 60 | - 300 | - | 200 | 30 | 50 |
| 84 | He/N₂ | 60 | - 300 | - | 200 | 30 | 50 |
| 85 | He/N₂ | 60 | - 300 | - | 200 | 30 | 50 |
| 86 | NH3 | 60 | - 300 | - | 200 | 30 | 50 |
| 87 | NH3 | 60 | - 300 | - | 200 | 30 | 50 |
| 88 | He/NH3 | 60 | - 300 | - | 200 | 30 | 50 |
| 89 | He/NH3 | 60 | -300 | - | 200 | 30 | 50 |
| 90 | Ar/N₂ | 60 | - 300 | - | 200 | 30 | 50 |
| 91 | Ar/N₂ | 60 | - 300 | - | 200 | 30 | 50 |
| 92 | Ar/NH3 | 60 | - 300 | - | 200 | 30 | 50 |
| 93 | Ar/NH3 | 60 | - 300 | - | 200 | 30 | 50 |
| 94 | N₂ | 60 | - 300 | - | 200 | 10 | 50 |
| 95 | N₂ | 60 | - 300 | - | 200 | 30 | 50 |
| 96 | N₂ | 60 | -300 | - | 200 | 30 | 50 |
| 97 | N₂ | 60 | 300 v | - | 200 | 30 | 50 |
| 98 | N₂ | 60 | 300 v | - | 200 | 30 | 50 |
| | | | | | | | 50 |

Within the conditions presented in Table 1, above, except for the backings treated with pure oxygen plasma, all the backings treated demonstrated adhesive power to protein-containing hydrogels. The results further showed that the addition of an inert gas such as helium or argon to nitrogen or ammonia as plasma gas does not noticeably improve the adhesion of the treated backings. Detailed adhesion and XPS results are presented in Tables 3 and 5, below, with representative samples of the backings treated according to the conditions described in Table 1.

### Example 5: Continuous treatment processing of PET

Rolls of PET having a thickness of 50 µm were exposed to nitrogen plasma at flow rates varying between 30 and 100 sccm with a radiofrequency power leading to bias values varying between 30 and 400 volts with a pressure of 200 mTorr.

Table 2 below presents conditions under which the treatments for samples 99 to 120 were performed and for which the nitrogen/oxygen ratio on their surfaces was measured by XPS.

**Table 2: Treatment Conditions for Additional Polymer Backing Experiments**

| # | Gas flow [sccm] | RF bias [V] | Speed of the polymer [cm/sec] | PET thickness [m] |
|---|---|---|---|---|
| 99 | 30 | 300 | 0,5 | 50 |
| 100 | 30 | 300 | 0,2 | 50 |
| 101 | 30 | 300 | 0,2 | 50 |
| 102 | 30 | 300 | 0,3 | 50 |
| 103 | 30 | 300 | 0,3 | 50 |
| 104 | 30 | 300 | 0,3 | 50 |
| 105 | 100 | 300 | 0,3 | 50 |
| 106 | 100 | 450 | - | 50 |
| 107 | 100 | 450 | - | 50 |
| 108 | 60 | 300 | - | 50 |
| 109 | 100 | 300 | 0,3 | 50 |
| 110 | 90 | 300 | 0,3 | 25 |
| 111 | 90 | 300 | 1,0 | 25 |
| 112 | 90 | 300 | 3,0 | 25 |
| 113 | 90 | 200 | 0,3 | 25 |
| 114 | 90 | 180 | 1,0 | 25 |
| 115 | 90 | 180 | 3 | 25 |
| 116 | 90 | 180 | 5 | 25 |
| 117 | 90 | 300 | 5 | 25 |
| 118 | 90 | 200 | 1,0 | 25 |
| 119 | 90 | 300 | 0,6 | 25 |
| 120 | 90 | 300 | 0,3 | 25 |

Within the conditions presented in Table 2 above, all the treated backings demonstrated adhesive power to protein-containing hydrogels. Detailed adhesion and XPS results are summarized in Tables 4 and 6, below, for representative samples of the backings treated according to the conditions described in Table 2.

The adhesion property of PET samples was analyzed at various aging times while in storage in open atmospheric conditions with hydrogels composed of polyethylene glycol and 8 K - soya globumin protein (hereinafter called "PEG-SOYA"), PEG-PA and PEG-BSA.

The combination of the hydrogel with the PET films was achieved simply by depositing a hydrogel layer on the treated backing. A piece of PET of the brand MYLAR^{™} of desirable size was cut and deposited on a layer of hydrogel where the excess water on the surface had been removed.

It was observed that when the hydrogel attached to the backing, this attachment was irreversible.

### Example 6: Adhesive power of plasma treated backings versus aging

The adhesion property of PET backings versus aging times was tested on PEG-BSA, PEG-PA and PEG-SOYA in three different storage conditions: Free air atmosphere, vacuum dessicator and nitrogen atmosphere.

Table 3 below presents the adhesive power of representative samples of treated PET backings at different aging times. In these tables, the treatment numbers correspond to the samples defined in Table 1, above.

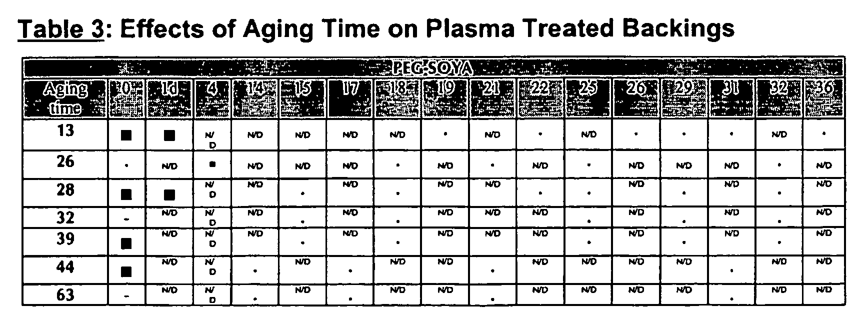

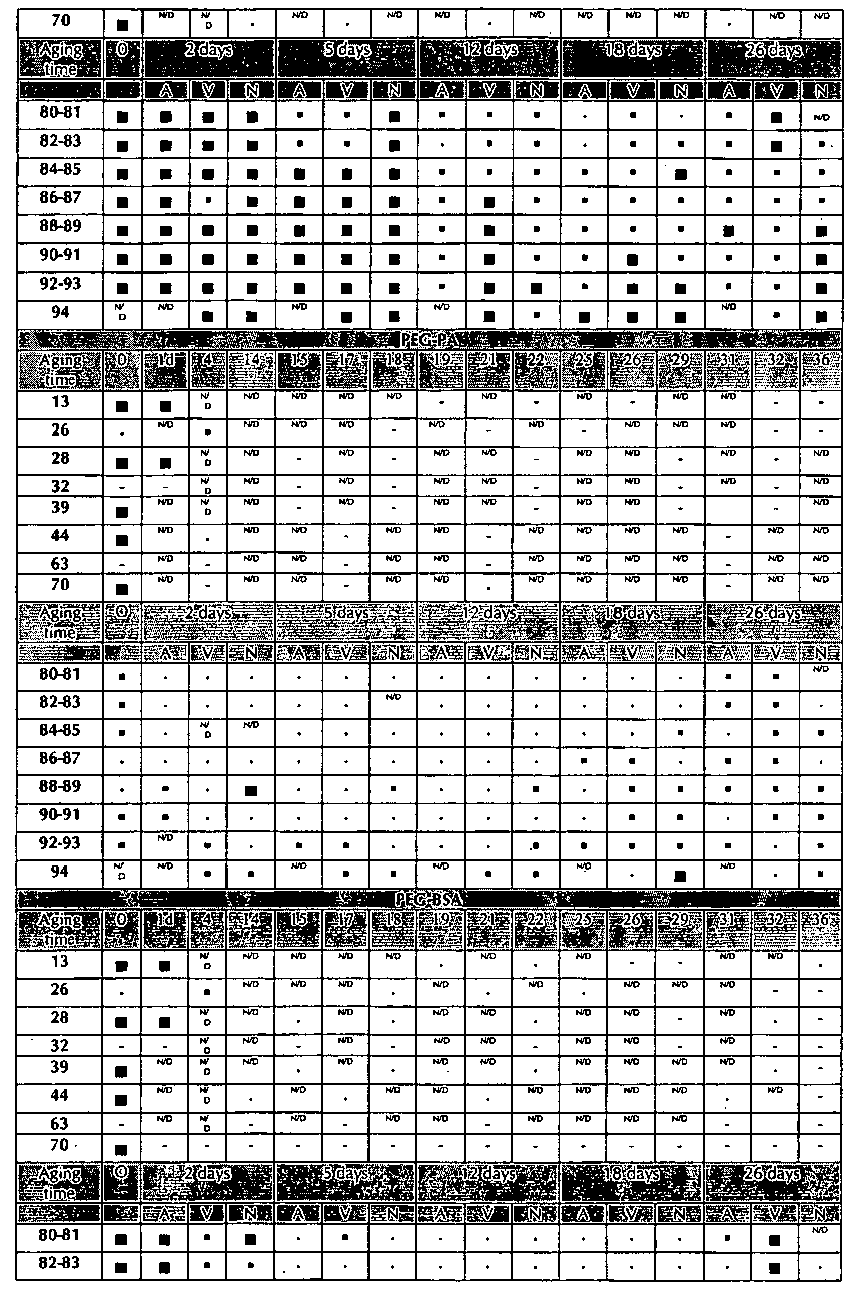

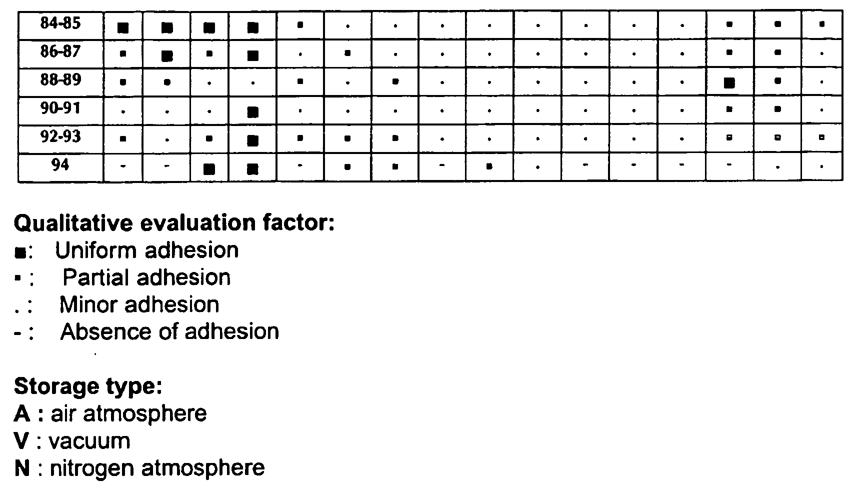

These results show that the adhesive power in three types of hydrogels, namely, PEG-SOYA, PEG-PA and PEG-BSA, is generally uniform when the treated backing has an aging time of 0 to 2 days, and that the uniformity generally decreases with time.

Table 4, below, presents the adhesive power of other representative samples of treated PET films when applied to PEG-SOYA for aging times of 0 days and 5 days. In this Table, the treatment numbers correspond to the treatment numbers of the treated samples defined in Table 2, above.

**Table 4: Conditions for Additional Polymer Backing Continuous Treatments and Aging Results**

| Treatment # | RF [V] | Gas flow [sccm] | Speed of the polymer [cm/sec] | As -treated | 5days |
|---|---|---|---|---|---|
| 100 | -300 | 60 | 0.5 | - | - |
| 101 | -300 | 60 | 0.2 | ■ | - |
| 102 | - 300 | 60 | 0.2 | ■ | - |
| 103 | - 300 | 60 | 0.3 | ■ | - |
| 104 | - 300 | 60 | 0.3 | - | - |
| 105 | - 300 | 60 | 0.3 | ■ | - |
| 106 | - 300 | 60 | 0.3 | ■ | - |
| 107 | - 300 | 100 | 0.3 | - | - |
| 108 | - 450 | 100 | 0 / 30 | . | - |
| 109 | - 300 | 60 | 0 /30 | 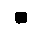 | - |
| 110 | - 300 | 90 | 0.3 | - | - |
| 111 | - 300 | 90 | 0.3 | ■ | 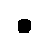 |
| 112 | - 300 | 90 | 1 | ■ | - |
| 113 | - 300 | 90 | 3 | 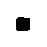 | - |
| 114 | - 200 | 90 | 0.3 | . | - |
| 115 | - 200 | 90 | 1 | . | - |
| 116 | - 200 | 90 | 3 | - | - |
| 117 | - 200 | 90 | 5 | - | - |
| 118 | - 300 | 90 | 5 | - | - |

| | | | | | |
|---|---|---|---|---|---|
| **Qualitative Evaluation factor:** | | | | | |
| ■: Uniform adhesion | | | | | |
| 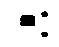 Partial adhesion | | | | | |
| .: Residual adhesion | | | | | |
| -: Absence of adhesion | | | | | |

These results also show that the adhesive power to three types of hydrogels, namely, PEG-SOYA, PEG-PA and PEG-BSA, is generally uniform when the treated backing has an aging time of 0 to 2 days and that the uniformity generally decreases with time.

### Example 7: X-ray photoelectron spectroscopy analysis

To establish a correlation with the adhesion property of treated backings and the nature and proportion of various atoms on their surface, XPS was performed on selected samples of treated PET films.

Tables 5 and 6, below, present the XPS results for representative samples. Table 5 further shows comparative XPS results for the samples stored in various conditions: free atmosphere, nitrogen atmosphere and vacuum. In these Tables, the treatment numbers correspond to the samples defined, respectively, in Table 1, above.

**Table 5: Results of XPS Analysis for Differents Polymer Backings**

| Treatment # | Aging time [days] | Storage conditions | O [at.%] | N [at.%] | C [at. %] | N/O ratio |
|---|---|---|---|---|---|---|
| 13 | 7 | Free atmosphere | 19.5 | 10.3 | 70.2 | 0.53 |
| 28 | 3 | Free atmosphere | 17 | 12 | 71 | 0.71 |
| 32 | 3 | Free atmosphere | 30 | 0.7 | 69.7 | 0.02 |
| 49 | 1 | Free atmosphere | 17.5 | 10.1 | 72.5 | 0.58 |
| 57 | 1 | Free atmosphere | 15.4 | 13.6 | 71 | 0.88 |
| | | | | | | |
| 81 | 5 | Free atmosphere | 14.9 | 13.7 | 71.4 | 0.92 |
| 94 | 5 | Nitrogen | 15 | 12.7 | 72.3 | 0.85 |
| 94 | 5 | Vacuum | 15.4 | 12.9 | 71.7 | 0.84 |
| 82 | 5 | Free atmosphere | 16.7 | 9.5 | 73.8 | 0.57 |
| 85 | 5 | Free atmosphere | 14.2 | 13.1 | 72.7 | 0.92 |
| 83 | 5 | Free atmosphere | 18.4 | 10.4 | 71.2 | 0.57 |
| 91 | 5 | Free atmosphere | 15 | 13.9 | 71.1 | 0.93 |
| 93 | 5 | Free atmosphere | 16.5 | 11.0 | 71.5 | 0.67 |

**Table 6: Nitrogen/Oxygen Ratio for Differents PET Backings**

| Treatment # | Oxygen [at.%] | Nitrogen [at.%] | N/O ratio |
|---|---|---|---|
| 106 | 14.59 | 27.22 | 1.87 |
| 111 | 14.72 | 24.92 | 1.69 |
| 112 | 18.05 | 17.97 | 1.00 |
| 113 | 19.64 | 13.38 | 0.68 |
| 114 | 22.45 | 15.12 | 0.67 |
| 115 | 23.18 | 12.76 | 0.55 |
| 116 | 22.55 | 7.99 | 0.35 |
| 117 | 27.59 | 7.52 | 0.27 |
| 118 | 23.82 | 10.76 | 0.45 |
| Untreated | 27.12 | - | - |
| Untreated + Pumped | 27.88 | - | - |

Table 7, below, presents the adhesive power of representative samples of treated PET when applied to PEG-SOYA hydrogels and the nitrogen/oxygen ratio of their surface as measured by XPS. In this table, the treatment numbers correspond to the samples defined, respectively, in Table 1 and 2, above.

**Table 7: Correlation between adhesive power and N/O ratio**

| # | Adhesive power | N/O ratio |
|---|---|---|
| 109 | ■ | 1.87 |
| 110 | ■ | 1.69 |
| 111 | **■** | 1.00 |
| 112 | 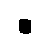 | 0.68 |
| 113 | . | 0.67 |
| 114 | . | 0.55 |
| 115 | - | 0.35 |
| 116 | - | 0.27 |
| 117 | - | 0.45 |
| 81 | 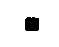 | 0.92 |
| 82 | 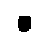 | 0.57 |
| 85 | ■ | 0.92 |
| 83 | 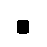 | 0.57 |
| 91 | ■ | 0.93 |
| 93 | ■ | 0.67 |

| | | |
|---|---|---|
| Qualitative evaluation factor: | | |
| ■: Uniform adhesion | | |
| 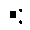 Partial adhesion | | |
| .: Residual adhesion | | |
| -: Absence of adhesion | | |

These results show that there is a correlation between the nitrogen/oxygen ratio on treated surfaces of backings and the adhesion properties of these films. Indeed, treated backings where XPS analysis showed nitrogen/oxygen ratios higher than 0.5 have all demonstrated more or less uniform adhesive powers, whereas those where such ratios were lower than 0.5 have demonstrated poor adhesion.

### Example 8: Adhesion force measured by peel test

In order to quantify the adhesion force between treated polymer and hydrogel, we performed peel test measurements in which 1 inch x 2 inch x 0.1 inch hydrogel samples were placed between two pieces of activated polymer. The adhesion was then determined as a force necessary to separate the backing from the hydrogel or to brake the hydrogel (adhesive or cohesive failure). As an example, we measured the adhesion force between polypropylene (PP) polymer backing and PEG-SOYA hydrogel. Table 8 below presents the results for different times of treatment using nitrogen plasma (RF plasma in a continuous mode). The experimental conditions were as follows: nitrogen flow - 100 sccm, pressure - 180 mTorr, rf bias - - 300V.

**Table 8: Effect of treatment time on adhesion force**

| Treatment time, s | Adhesion force, g/inch |
|---|---|
| 0 | 0.8 |
| 3.9 | 19.2 |
| 6.1 | 21.8 |
| 8.1 | 22.9 |
| 12.2 | 24.2 |
| 22.4 | 28.7 |

Even a short, 4-second long treatment leads to a 20-fold increase of adhesion; this is considered to be a value acceptable for most applications. Treatment times that are five times longer add another 50% to the adhesion force, where a cohesive failure occurs in hydrogels. Clearly, conditions can be identified wherein even a shorter treatment time would be sufficient to reach such an increase in adhesion; for example, using a different RF power, pressure etc.

We also evaluated quantitatively the adhesion as a function of time after having applied the hydrogel to an activated backing, while storing the samples in ambient air. The results for the PP/PEG-SOYA system are summarized in Table 9.

**Table 9: Adhesion force vs time of exposure to ambient air**

| Air exposure time, min | Adhesion force, g/inch |
|---|---|
| 10 | 3.3 |
| 15 | 3.8 |
| 30 | 4.4 |
| 45 | 6.4 |
| 60 | 7.8 |
| 90 | 18.2 |
| 120 | 14.7 |
| 150 | 34.6 |
| 180 | 52.7 |

One can see that the adhesion force increases significantly with time. This can be related to two effects, which act in synergy. First, when the gel surface dries, more covalent bond sites are available, and this leads to a higher adhesion force. Second, since the gel itself becomes more rigid due to water loss, a higher force is needed to cohesively brake the hydrogel.

In another experiment, we left the hydrogel to dry completely when attached to a backing. We found that it is possible to rehydrate this dry hydrogel to its original water content, while the hydrogel remained firmly adhered to the backing.

### References

1. US patent no. 5,849,368
2. US patent no. 5,733,563
3. K.L. Mittal and L. Pizzo, eds., *Adhesion Promotion Techniques - Technological Applications* (New York: Marcel Dekker, Inc., 1999).

## Claims

1. A method of attaching a preformed hydrogel to a polymer backing comprising the steps of:
providing a preformed hydrogel;
treating a surface of a polymer backing with an activated gas; and
depositing the preformed hydrogel on the treated surface of the polymer backing.

2. A method as defined in claim 1, wherein the preformed hydrogel comprises a protein.

3. A method as defined in claim 2, wherein the preformed hydrogel comprises activated polyethylene glycol.

4. A method as defined in claim 2, wherein the protein is selected from the group consisting of bovine serum albumin, soy protein, casein, pea albumin, ovalbumin, and hydrolyzed forms thereof.

5. A method as defined in any one of the preceding claims , wherein the polymer backing comprises a polymer selected from the group consisting of rubber and plastic.

6. A method as defined in claim 5, wherein the plastic is selected from the group consisting of polyethylene, polyethylene terephthalate, polypropylene, polyurethane, polyether block amide, ethyl vinyl acetate, polyester, copolyesters, polyvinyl chloride, nylon, acetal, polysulfone, polyphenylene sulphide, polyetheretherketone, polytetrafluoroethylene, polystyrene, polycarbonate, and polymethylmethacrylate.

7. A method as defined in claim 5, wherein the rubber is selected from the group consisting of neoprene and nitrile.

8. A method as defined in any one of the preceding claims, wherein the activated gas originates from an electrical discharge using an excitation frequency.

9. A method as defined in claim 8, wherein said excitation frequency is selected from the group consisting of low frequency, radiofrequency, microwave frequency, and a simultaneous use of radiofrequency and microwave frequency.

10. A method as defined in any one of the preceding claims, wherein the activated gas treatment comprises a plasma gas treatment.

11. A method as defined in claim 10, wherein the plasma gas comprises a gas selected from the group consisting of nitrogen, ammonia, a mixture of nitrogen with at least one other gas, and a mixture of ammonia with at least one other gas.

12. A method as defined in any one of the preceding claims, wherein subsequent to the treating step, the surface of the polymer backing comprises a nitrogen/oxygen atomic ratio of at least 0.5.

13. A method as defined in any one of the preceding claims, wherein said activated gas treatment is performed under a working pressure between 0.1 mTorr to 760 Torr.

14. A method as defined in claim 13, wherein said working pressure is between 10 mTorr to 1 Torr.

15. A hydrogel product comprising:
a protein containing preformed hydrogel; and
a polymer backing attached to the protein containing hydrogel, the polymer backing having been modified by an activated gas treatment.

16. A hydrogel product as defined in claim 15, wherein the protein containing preformed hydrogel comprises activated polyethylene glycol.

17. A hydrogel product as defined in any one of claim 15 or claim 16, wherein the protein is selected from the group consisting of bovine serum albumin, soy protein, casein, pea albumin, ovalbumin, and hydrolyzed forms thereof.

18. A hydrogel product as defined in any one of claims 15 to 17, wherein the polymer backing comprises a polymer selected from the group consisting of rubber and plastic.

19. A hydrogel product as defined in claim 18, wherein the plastic is selected from the group consisting of polyethylene, polyethylene terephthalate, polypropylene, polyurethane, polyether block amide, ethyl vinyl acetate, polyester, copolyesters, polyvinyl chloride, nylon, acetal, polysulfone, polyphenylene sulphide, polyetheretherketone, polytetrafluoroethylene, polystyrene, polycarbonate, and polymethylmethacrylate.

20. A hydrogel product as defined in claim 18, wherein the rubber is selected from the group consisting of neoprene and nitrile.

21. A hydrogel product as defined in any one of claims 15 to 20, wherein the activated gas comprises a gas selected from the group consisting of nitrogen, ammonia, a mixture of nitrogen with at least one other gas, and a mixture of ammonia with at least one other gas.

22. A hydrogel product as defined in any one of claims 15 to 21, wherein a surface of the polymer backing contiguous to the protein containing preformed hydrogel comprise a nitrogen/oxygen atomic ratio of at least 0.5.

23. Use of a hydrogel product as defined in any one of claims 15 to 22 as a layer for covering and preserving the moisture of objects, food and tissues.

24. Use of a hydrogel product as defined in any one of claims 15 to 22 as an active ingredient delivery system.

25. Use of a hydrogel product as defined in any one of claims 15 to 22 as a diagnostic tool.

## Patentansprüche

1. Verfahren zum Anheften eines vorgeformten Hydrogels an einen Polymerträger, wobei das Verfahren folgendes aufweist:
Bereitstellen eines vorgeformten Hydrogels;
Behandeln einer Oberfläche eines Polymerträgers mit einem aktivierten Gas; und
Ablagern des vorgeformten Hydrogels auf die behandelte Oberfläche des Polymerträgers.

2. Verfahren nach Anspruch 1, wobei das vorgeformte Hydrogel ein Protein aufweist.

3. Verfahren nach Anspruch 2, wobei das vorgeformte Hydrogel ein aktiviertes Polyethylenglykol aufweist.

4. Verfahren nach Anspruch 2, wobei das Protein ausgewählt ist aus der Gruppe bestehend aus Rinderserumalbumin, Sojaprotein, Kasein, Erbsenalbumin, Ovalbumin, und hydrolysierte Formen davon.

5. Verfahren nach einem der vorangehenden Ansprüche, wobei der Polymerträger ein Polymer aufweist, welches aus der Gruppe Gummi und Kunststoff ausgewählt ist.

6. Verfahren nach Anspruch 5, wobei der Kunststoff aus der Gruppe bestehend aus Polyethylen, Polyethylenterephthalat, Polypropylen, Polyurethan, Polyetherblockamid, Ethylvinylacetat, Polyester, Copolyester, Polyvinylchlorid, Nylon, Acetal, Polysulfon, Polyphenylensulfid, Polyetheretherketon, Polytetrafluorethylen, Polystyrol, Polycarbonat, und Polymethylmethacrylat ausgewählt ist.

7. Verfahren nach Anspruch 5, wobei der Gummi aus der Gruppe bestehend aus Neopren und Nitril ausgewählt ist.

8. Verfahren nach einem der vorangehenden Ansprüche, wobei das aktivierte Gas von einer elektrischen Entladung unter Verwendung von einer Anregungsfrequenz stammt.

9. Verfahren nach Anspruch 8, wobei die Anregungsfrequenz aus der Gruppe bestehend aus Niederfrequenz, Radiofrequenz, Mikrowellenfrequenz, und einer gleichzeitigen Anwendung von Radiofrequenz und Mikrowellenfrequenz ausgewählt ist.

10. Verfahren nach einem der vorangehenden Ansprüche, wobei die aktivierte Gasbehandlung eine Gasplasmabehandlung aufweist.

11. Verfahren nach Anspruch 10, wobei das Gasplasma ein Gas aufweist, welches ausgewählt ist aus der Gruppe bestehend aus Stickstoff, Ammoniak, einer Mischung von Stickstoff mit zumindest einem anderen Gas, und einer Mischung von Ammoniak mit zumindest einem anderen Gas.

12. Verfahren nach einem der vorangehenden Ansprüche, wobei im Anschluss an den Behandlungsschritt die Oberfläche des Polymerträgers ein atomares Verhältnis von Stickstoff/Sauerstoff von zumindest 0,5 aufweist.

13. Verfahren nach einem der vorangehenden Ansprüche, wobei die aktivierte Gasbehandlung mit einem Arbeitsdruck zwischen 0,1mTorr [0,0133 Pa] bis 760 Torr [101.324 Pa] durchgeführt wird.

14. Verfahren nach Anspruch 13, wobei der Arbeitsdruck zwischen 10 mTorr [1,33 Pa] und 1 Torr [133,3 Pa] ist.

15. Hydrogelprodukt, welches aufweist:
ein Protein enthaltendes vorgeformtes Hydrogel; und
Polymerträger, welcher an ein Protein enthaltendes Hydrogel angeheftet ist, wobei der Polymerträger durch eine aktivierte Gasbehandlung modifiziert ist.

16. Hydrogelprodukt nach Anspruch 15, wobei das Protein enthaltendes vorgeformtes Hydrogel, ein aktiviertes Polyethylenglykol aufweist.

17. Hydrogelprodukt nach Anspruch 15 oder Anspruch 16, wobei das Protein aus der Gruppe bestehend aus Rinderserumalbumin, Sojaprotein, Kasein, Erbsenalbumin, Ovalalbumin oder hydrolysierten Formen davon, ausgewählt ist.

18. Hydrogelprodukt nach einem der Ansprüche 15 bis 17, wobei der Polymerträger ein Polymer, welches aus der Gruppe bestehend aus Gummi und Kunststoff ausgewählt ist, aufweist.

19. Hydrogelprodukt nach Anspruch 18, wobei der Kunststoff aus der Gruppe bestehend aus Polyethylen, Polyethylenterephthalat, Polypropylen, Polyurethan, Polyetherblockamid, Ethylvinylacetat, Polyester, Copolyester, Polyvinylchlorid, Nylon, Acetal, Polysulfon, Polyphenylensulfid, Polyetheretherketon, Polytetrafluorethylen, Polystyrol, Polycarbonat, und Polymethylmethacrylat ausgewählt ist.

20. Hydrogelprodukt nach Anspruch 18, wobei der Gummi aus der Gruppe bestehend aus Neopren und Nitril ausgewählt ist.

21. Hydrogelprodukt nach einem der Ansprüche 15 bis 20, wobei das aktivierte Gas ein Gas aufweist, welches ausgewählt ist aus der Gruppe bestehend aus Stickstoff, Ammoniak, einer Mischung von Stickstoff mit zumindest einem anderen Gas, und einer Mischung von Ammoniak mit zumindest einem anderen Gas.

22. Hydrogelprodukt nach einem der Ansprüche 15 bis 21, wobei eine Oberfläche des Polymerträgers, welche mit einem Protein enthaltendes vorgeformtes Hydrogel zusammenhängt, ein atomares Verhältnis von Stickstoff/Sauerstoff von zumindest 0,5 aufweist.

23. Verwendung des Hydrogelprodukts nach einem der Ansprüche 15 bis 22 als eine Schicht zum Bedecken und Bewahren der Feuchtigkeit von Gegenständen, Lebensmitteln und Geweben.

24. Verwendung eines Hydrogelprodukts nach einem der Ansprüche 15 bis 22 als ein Wirkstoffabgabesystem.

25. Verwendung eines Hydrogelprodukts nach einem der Ansprüche 15 bis 22 als ein diagnostisches Werkzeug.

## Revendications

1. Procédé de fixation d'un hydrogel préformé à un support de polymère comprenant les étapes suivantes :
la mise en oeuvre d'un hydrogel préformé;
le traitement d'une surface d'un support de polymère avec un gaz activé; et
le dépôt de l'hydrogel préformé sur la surface traitée du support de polymère.

2. Procédé selon la revendication 1, dans lequel l'hydrogel préformé comprend une protéine.

3. Procédé selon la revendication 2, dans lequel l'hydrogel préformé comprend un polyéthylèneglycol activé.

4. Procédé selon la revendication 2, dans lequel la protéine est choisie dans le groupe constitué de l'albumine de sérum bovin, de la protéine de soja, de la caséine, de l'albumine de pois, de l'ovalbumine et de leurs formes hydrolysées.

5. Procédé selon l'une quelconque des revendications précédentes, dans lequel le support de polymère comprend un polymère choisi dans le groupe constitué de caoutchouc et d'un matériau synthétique.

6. Procédé selon la revendication 5, dans lequel le matériau synthétique est choisi dans le groupe constitué du polyéthylène, du poly(téréphtalate d'éthylène), du polypropylène, du polyuréthanne, d'un amide séquencé de polyéther, de l'acétate d'éthylvinyle, d'un polyester, de copolyesters, du poly(chlorure de vinyle), du Nylon, d'un acétal, d'une polysulfone, du poly(sulfure de phénylène), de la polyétheréthercétone, du polytétrafluoroéthylène, du polystyrène, d'un polycarbonate et du poly(méthacrylate de méthyle).

7. Procédé selon la revendication 5, dans lequel le caoutchouc est choisi dans le groupe constitué du néoprène et du nitrile.

8. Procédé selon l'une quelconque des revendications précédentes, dans lequel le gaz activé provient d'une décharge électrique en utilisant une fréquence d'excitation.

9. Procédé selon la revendication 8, dans lequel ladite fréquence d'excitation est choisie dans le groupe constitué d'une fréquence basse, d'une radiofréquence, d'une fréquence de micro-ondes et d'une utilisation simultanée de la radiofréquence et de la fréquence de micro-ondes.

10. Procédé selon l'une quelconque des revendications précédentes, dans lequel le traitement au gaz activé comprend un traitement au gaz plasma.

11. Procédé selon la revendication 10, dans lequel le gaz plasma comprend un gaz choisi dans le groupe constitué de l'azote, de l'ammoniac, d'un mélange d'azote avec au moins un autre gaz et d'un mélange d'ammoniac avec au moins un autre gaz.

12. Procédé selon l'une quelconque des revendications précédentes, dans lequel, à la suite de l'étape de traitement, la surface du support de polymère comprend un rapport atomique azote/oxygène d'au moins 0,5.

13. Procédé selon l'une quelconque des revendications précédentes, dans lequel ledit traitement au gaz activé est effectué sous une pression de travail de 0,1 mTorr à 760 Torr.

14. Procédé selon la revendication 13, dans lequel ladite pression de travail est de 10 mTorr à 1 Torr.

15. Produit de type hydrogel comprenant :
un hydrogel préformé contenant une protéine; et
un support de polymère fixé à l'hydrogel contenant une protéine, le support de polymère ayant été modifié par un traitement au gaz activé.

16. Produit de type hydrogel selon la revendication 15, dans lequel l'hydrogel préformé contenant une protéine comprend du polyéthylèneglycol activé.

17. Produit de type hydrogel selon la revendication 15 ou 16, dans lequel la protéine est choisie dans le groupe constitué de l'albumine de sérum bovin, de la protéine de soja, de la caséine, de l'albumine de pois, de l'ovalbumine et de leurs formes hydrolysées.

18. Produit de type hydrogel selon l'une quelconque des revendications 15 à 17, dans lequel le support de polymère comprend un polymère choisi dans le groupe constitué du caoutchouc et d'un matériau synthétique.

19. Produit de type hydrogel selon la revendication 18, dans lequel le matériau synthétique est choisi dans le groupe constitué du polyéthylène, du poly(téréphtalate d'éthylène), du polypropylène, du polyuréthanne, d'un amide séquencé de polyéther, de l'acétate d'éthylvinyle, d'un polyester, de copolyesters, du poly(chlorure de vinyle), du Nylon, d'un acétal, d'une polysulfone, du poly(sulfure de phénylène), d'une polyétheréthercétone, du polytétrafluoroéthylène, du polystyrène, d'un polycarbonate et du poly(méthacrylate de méthyle).

20. Produit de type d'hydrogel selon la revendication 18, dans lequel le caoutchouc est choisi dans le groupe constitué du néoprène et du nitrile.

21. Produit de type hydrogel selon l'une quelconque des revendications 15 à 20, dans lequel le gaz activé comprend un gaz choisi dans le groupe constitué de l'azote, de l'ammoniac, d'un mélange d'azote avec au moins un autre gaz et d'un mélange d'ammoniac avec au moins un autre gaz.

22. Produit de type hydrogel selon l'une quelconque des revendications 15 à 21, dans lequel une surface du support de polymère contiguë à l'hydrogel préformé contenant une protéine comprend un rapport atomique azote/oxygène d'au moins 0,5.

23. Utilisation d'un produit de type hydrogel selon l'une quelconque des revendications 15 à 22 comme couche pour recouvrir des objets, des aliments et des tissus et en conserver l'humidité.

24. Utilisation d'un produit de type hydrogel selon l'une quelconque des revendications 15 à 22 comme système d'administration d'ingrédients actifs.

25. Utilisation d'un produit de type hydrogel selon l'une quelconque des revendications 15 à 22 comme outil de diagnostic.
